Europäisches Patentamt

European Patent Office

Office européen des brevets

(11) Veröffentlichungsnummer: **0 265 650**
**A2**

(12) ## EUROPÄISCHE PATENTANMELDUNG

(21) Anmeldenummer: 87113516.6

(22) Anmeldetag: 16.09.87

(51) Int. Cl.⁴: **C08K 3/22** , C08J 9/00 , C08L 75/04

(30) Priorität: 27.09.86 DE 3632915

(43) Veröffentlichungstag der Anmeldung:
04.05.88 Patentblatt 88/18

(84) Benannte Vertragsstaaten:
AT BE CH DE FR GB IT LI NL SE

(71) Anmelder: BAYER AG
Konzernverwaltung RP Patentabteilung
D-5090 Leverkusen 1 Bayerwerk(DE)

(72) Erfinder: Adam, Norbert, Dr.
Semmelweisstrasse 79
D-5000 Koeln 80(DE)
Erfinder: Wiedermann, Rolf, Dr.
Wiesenstrasse 18
D-5068 Odenthal(DE)

(54) Verwendung von Mg(OH) 2 bei der Herstellung von Schaumstoffen auf Basis von aromatischen Isocyanaten.

(57) $Mg(OH)_2$ wird bei der Herstellung von Schaumstoffen auf Basis von aromatischen Isocyanaten verwendet.

EP 0 265 650 A2

## Verwendung von Mg(OH)₂ bei der Herstellung von Schaumstoffen auf Basis von aromatischen Isocyanaten

Schaumstoffe auf Basis von aromatischen Isocyanaten sind bekanntlich brennbar, wenn sie nicht brandgeschützt werden.

Brandnebenerscheinungen wie die optische Rauchgasdichte - im folgenden nur als Rauchgasdichte bezeichnet -führen im Brandfall zu einer Gefährdung, die über die direkte Brandeinwirkung hinausgeht. In der Diskussion über die Risiken bei Bränden von Schaumstoffen auf Isocyanatbasis gewinnt die Rauchgasdichte daher zunehmend an Bedeutung.

Man hat bereits versucht, Schaumstoffe auf Basis von aromatischen Isocyanaten durch Zusatz von Metallverbindungen wie Antimontrioxid gegen Entflammung zu schützen. Schwermetalloxide wie Antimontrioxid können zwar die Rauchgasdichte senken. Hierdurch entsteht jedoch vielfach die Gefahr einer erhöhten Schwermetallbelastung.

Aufgabe der Erfindung war, Schaumstoffe auf Basis von aromatischen Isocyanaten bereitzustellen, die im Brandfall niedrige Rauchgasdichte hervorrufen, ohne zu einer erhöhten Schwermetallbelastung zu führen.

Die Verwendung von Mg(OH)₂ wurde schon für verschiedene Kunststoffe vorgeschlagen, z.B. Polyethylen und Polypropylen (s. z.B. in Plastics Technology, July 1985, S. 70 ff) und für Polyurethane auf Basis Hexamethylen-diisocyanat (JA 58 225 116, Hitachi Cable), nicht aber für Schaumstoffe auf Basis von Isocyanaten.

Das erfindungsgemäß eingesetzte Mg(OH)₂ weist den Nachteil der Schwermetallbelastung nicht auf, zeigt aber in Schaumstoffen auf Basis von aromatischen Isocyanaten rauchgasunterdrückende Wirkung. Besonders überraschend tritt diese Unterdrückung auch in Schaumstoffen auf, die phosphor-und/oder halogenhaltige Flammschutzmittel enthalten.

Gegenstand der Erfindung ist die Verwendung von Mg(OH)₂ bei der Herstellung von Schaumstoffen auf Basis von aromatischen Isocyanaten, wobei Mg(OH)₂ in einer Menge von 4 bis 100 Gew.-%, insbesondere in einer Menge von 4 - 50 Gew.-%, noch mehr bevorzugt in einer Menge von 4 - 10 Gew.-%, bezogen auf den Schaumstoff auf Basis von aromatischen Isocyanaten, eingesetzt wird.

Ferner ist erfindungsgemäß bevorzugt, daß das Mg(OH)₂ in einer Korngröße von 0,5 - 50 μm, vorzugsweise von 5 - 40 μm, eingesetzt wird.

Erfindungsgemäß ist weiter bevorzugt, daß Mg (OH)₂ bei der Herstellung von solchen Schaumstoffen auf Basis von aromatischen Isocyanaten verwendet wird, die 2 -20 Gew.-%, bezogen auf den Schaumstoff, an Halogen-und/oder Phosphorverbindungen enthalten.

Die Herstellung von Schaumstofen auf Isocyanatbasis ist an sich bekannt und z.B. in den deutschen Offenlegungsschriften 1 694 142, 1 694 215 und 1 720 768 sowie im Kunststoff-Handbuch Band VII, Polyurethane, herausgegeben von Vieweg und Höchtlen, Carl Hanser Verlag München 1966 sowie in der Neuauflage dieses Buches, herausgegeben von G. Oertel, Carl Hanser Verlag München, Wien 1983, beschrieben.

Es handelt sich dabei vorwiegend um Urethan-und/oder Isocyanurat-und/oder Allophanat-und/oder Uretdion und/oder Harnstoff-und/oder Carbodiimidgruppen aufweisende Schaumstoffe. Die erfindungsgemäße Verwendung von Mg(OH)₂ erfolgt vorzugsweise bei der Herstellung von Polyurethan-und Polyisocyanuratschaumstoffen.

Für die Herstellung der Schaumstoffe auf Basis von aromatischen Isocyanaten werden als Ausgangskomponenten eingesetzt:

1. Aromatische Polyisocyanate, wie sie z.B. von W. Siefken in Justus Liebigs Annalen der Chemie, 562, Seiten 75 bis 136, beschrieben werden, beispielsweise solche der Formel

$$Q(NCO)_n$$

in der

n 2-4 und

Q einen aromatischen Kohlenwasserstoffrest mit 6-15, vorzugsweise 6-13 C-Atomen bedeutet,

z.B. 1,3-und 1,4-Phenylendiisocyanat, 2,4-und 2,6-Toluylendiisocyanat sowie beliebige Gemische dieser Isomeren, Diphenylmethan-2,4'-und/oder -4,4'-diisocyanat oder Naphthylen-1,5-diisocyanat.

Ferner kommen beispielsweise erfindungsgemäß in Frage:

Triphenylmethan-4,4',4"-triisocyanat, Polyphenylpolymethylen-polyisocyanate, wie sich durch Anilin-Formaldehyd-Kondensation und anschließende Phosgenierung erhalten und z.B. in den GB-PS 874 430 und 848 671 beschrieben werden.

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Besonders bevorzugt werden in der Regel die technisch leicht zugänglichen aromatischen Polyisocyanate, z.B. das 2,4-und 2,6-Toluylendiisocyanat sowie beliebige Gemische dieser Isomeren ("TDI"), Polyphenyl-polymethylen-polyisocyanate, wie sie durch Anilin-Formaldehyde-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisenden Polyisocyanate ("modifizierte Polyisocyanate"), die sich vom 2,4-und/oder 2,6-Toluylendiisocyanat bzw. vom 4,4′-und/ oder 2,4′-Diphenyl-methandiisocyanat ableiten.

2. Gegebenenfalls zu verwendende Ausgangskomponenten sind ferner Verbindungen mit mindestens zwei gegenüber Isocyanaten reaktionsfähigen Wasserstoffatomen von einem Molekulargewicht in der Regel von 400 -10 000. Hierunter versteht man neben Aminogruppen, Thiolgruppen oder Carboxylgruppen aufweisenden Verbindungen vorzugsweise Hydroxylgruppen aufweisende Verbindungen, insbesondere zwei bis acht Hydroxylgruppen aufweisende Verbindungen, speziell solche vom Molekulargewicht 1000 bis 5000, vorzugsweise 800 bis 3000, z.B. mindestens zwei, in der Regel 2 bis 8, vorzugsweise aber 2 bis 4, Hydroxylgruppen aufweisende Polyester, Polyether, Polythioether, Polyacetale, Polycarbonate und Polyesteramide, wie sie für die Herstellung von homogenen und von zellförmigen Polyurethanen an sich bekannt sind, und wie sie z.B. in der DE-OS 3 430 285 auf den Seiten 10 - 18 ausführlich beschrieben werden. Mischungen derartiger Verbindungen können verwendet werden.

3. Gegebenenfalls sind weitere Ausgangskomponenten Verbindungen mit mindestens zwei gegenüber Isocyanaten reaktionsfähigen Wasserstoffatomen und einem Molekulargewicht von 32 bis 399. Auch in diesem Fall versteht man hierunter Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf.

Auch in diesem Fall können Mischungen von verschiedenen Verbindungen mit mindestens zwei gegenüber Isocyanaten reaktionsfähigen Wasserstoffatomen mit einem Molekulargewicht von 32 bis 399 verwendet werden.

Beispiele für derartige Verbindungen werden z.b. in der DE-OS 3 430 285 auf den Seiten 19 - 23 ausführlich beschrieben.

4. Als Treibmittel werden verwendet:

Wasser und/oder leicht flüchtige anorganische oder organische Substanzen. Als organische Treibmittel kommen z.B. Aceton, Ethylacetat, halogensubstituierte Alkane wie Monofluortrichlormethan, Chlordifluormethan, Dichlordifluormethan; als anorganische Treibmittel z.b. Luft, $CO_2$ oder $N_2O$, in Frage. Eine Treibwirkung kann auch durch Zusatz von bei Temperaturen über Raumtemperatur unter Abspaltung von Gasen, beispielsweise von Stickstoff, sich zersetzenden Verbindungen, z.B. Azoverbindungen wie Azodicarbonamid oder Azoisobuttersäurenitril, erzielt werden. Weitere Beispiele für Treibmittel sowie Einzelheiten über die Verwendung von Treibmitteln sind im Kunststoff-Handbuch, Band VII, herausgegeben von Vieweg und Höchtlen, Carl-Hanser-Verlag, München 1966, z.B. auf den Seiten 108 und 109, 453 bis 455 und 507 bis 510 beschrieben.

5. Gegebenenfalls werden als Hilfs-und Zusatzmittel mitverwendet:

a) Katalysatoren der an sich bekannten Art, z.B. tertiäre Amine, wie Triethylamin, Tributylamin, N-Methylmorpholin, N-Ethyl-morpholin, N,N,N′,N′-Tetramethyl-ethylendiamin, Pentamethyl-diethylen-triamin und höhere Homologe (DE-OS 2 624 527 und 2 624 528), 1,4-Diazabicyclo-(2,2,2)-octan, N-Methyl-N′-dimethylaminoethylpiperazin, Bis-(dimethylaminoalkyl) piperazine, (DE-OS 2 636 787), N,N-Dimethylbenzylamin, N,N-Dimethylcyclohexylamin, N,N-Diethylbenzylamin, Bis-(N,N-diethylaminoethyl)-adipat, N,N,N′N′-Tetramethyl-1,3-butandiamin, N,N,-Dimethyl-β-phenylethylamin, 1,2-Dimethylimidazol, 2-Methylimidazol, monocyclische und bicyclische Amidine (DE-OS 1 720 633), Bis-(dialkylamino) alkyl-ether (US-PS 3 33 0 782, DE-AS 030 558, DE-OS 1 804 361 und 2 618 280) sowie Amidgruppen (vorzugsweise Formamidgruppen) aufweisende tertiäre Amine gemäß den DE-OS 2 523 633 und 2 732 292). Als Katalysatoren kommen auch an sich bekannte Mannichbasen aus sekundären Aminen, wie Dimethylamin, und Aldehyden, vorzugsweise Formaldehyd, oder Ketonen wie Aceton, und Phenolen in Frage.

Gegenüber Isocyanatgruppen aktive Wasserstoffatome aufweisende teriäre Amine als Katalysator sind z.B. Triethanolamin, Triisopropanolamin, N-Methyl-diethanolamin, N-Ethyl-Diethanolamin, N,N-Dimethyl-ethanolamin, deren Umsetzungsprodukte mit Alkylenoxiden wie Propylenoxid und/oder Ethylenoxid sowie sekundärtertiäre Amine gemäß DE-OS 2 732 292.

3

0 265 650

Als Katalysatoren kommen ferner Silaamine mit Kohlenstoff-Silizium-Bindungen, wie sie z.B. in der DE-PS 1 229 290 (entsprechend der US-PS 3 620 984) beschrieben sind, in Frage, z.B. 2,2,4-Trimethyl-2-silamorpholin und 1,3-Diethylaminomethyl-tetramethyl-disiloxan.

Als Katalysatoren kommen auch stickstoffhaltige Basen wie Tetraalkylammoniumhydroxide, ferner Alkalihydroxide wie Natriumhydroxid, Alkaliphenolate wie Natriumphenolat oder Alkalialkoholate wie Natriummethylat in Betracht. Auch Hexahydrotriazine können als Katalysatoren eingesetzt werden (DE-OS 1 769 043), sowie Amidgruppen (vorzugsweise Formamidgruppen) aufweisende tertiäre Amine gemäß den DE-OS 2 523 633 und 2 732 292). Als Katalysatoren kommen auch an sich bekannte Mannichbasen aus sekundären Amine, wie Dimethylamin, und Aldehyden, vorzugsweise Formaldehyd, oder Ketonen wie Aceton, und Phenolen in Frage.

Erfindungsgemäß können auch organische Metallverbindungen, insbesondere organische Zinnverbindungen, als Katalysatoren, verwendet werden. Als organische Zinnverbindungen kommen neben - schwefelhaltigen Verbindungen wie Di-n-octyl-zinn-mercaptid (DE-AS 1 769 367; US-PS 3 645 927) vorzugsweise Zinn(II)-salze von Carbonsäuren wie Zinn(II)-acetat, Zinn(II)-octoat, Zinn(II)-ethylhexoat und Zinn(II)-laurat und Zinn(IV)-Verbindungen, z.B. Dibutylzinndilaurat in Betracht.

Selbstverständlich können alle obengenannten Katalysatoren als Gemische eingesetzt werden.

Weitere Vertreter von erfindungsgemäß zu verwendenden Katalysatoren sowie Einzelheiten über die Wirkungsweise der Katalysatoren sind im Kunststoff-Handbuch, Band VII, herausgegeben von Vieweg und Höchtlen, Carl-Hanser-Verlag, München 1966, z.B. auf den Seiten 96 bis 102 beschrieben.

Die Katalysatoren werden in der Regel in einer Menge zwischen etwa 0,001 und 10 Gew.-%, bezogen auf die Menge an aromatischem Polyisocyanat, eingesetzt.

b) Oberflächenaktive Zusatzstoffe, wie Emulgatoren und Schaumstabilisatoren. Als Emulgatoren kommen z.B. die Natriumsalze von Ricinusölsulfonaten oder Salze von Fettsäuren mit Aminen wie ölsaures Diethylamin oder stearinsaures Diethanolamin infrage. Auch Alkali-oder Ammoniumsalze von Sulfonsäuren wie etwa von Dodecylbenzolsulfonsäure oder Dinaphthylmethandisulfonsäure oder von Fettsäuren wie Ricinolsäure oder von polymeren Fettsäuren können als oberflächenaktive Zusatzstoffe mitverwendet werden.

Als Schaumstabilisatoren kommen vor allem Polyethersiloxane, speziell wasserlösliche Vertreter, infrage. Diese Verbindungen sind im allgemeinen so aufgebaut, daß ein Copolymerisat aus Ethylenoxid und Propylenoxid mit einem Polydimethylsiloxanrest verbunden ist. Derartige Schaumstabilisatoren sind z.B. in den US-PS 2 834 748, 2 917 480 und 3 629 308 beschrieben. Von besonderem Interesse sind vielfach über Allophanatgruppen verzweigte Polysiloxan-Polyoxyalkylen-Copolymere gemäß DE-OS 2 558 523.

c) Reaktionsverzögerer, z.B. sauer reagierende Stoffe wie Salzsäure oder organische Säurehalogenide, ferner Zellregler der an sich bekannten Art wie Paraffine oder Fettalkohole oder Dimethylpolysiloxane sowie Pigmente oder Farbstoffe und Flammschutzmittel der an sich bekannten Art, z.B. Trischlorethylphosphat, Dimethylmethanphosphonat, Trikresylphosphat oder Ammoniumphosphat und - polyphosphat, ferner Stabilisatoren gegen Alterungs-und Witterungseinflüsse, Weichmacher und fungistatisch und bakteriostatisch wirkende Substanzen sowie Füllstoffe wie Bariumsulfat, Kieselgur, Ruß oder Schlämmkreide.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weich machern, Farbstoffen und Füllstoffen sowie fungistatisch und bakteriostatisch wirksamen Substanzen sowie Einzelheiten über Verwendungs-und Wirkungsweise dieser Zusatzmittel sind im Kunststoff-Handbuch, Band VII, herausgegeben von Vieweg und Höchtlen, Carl-Hanser-Verlag, München 1966, z.B. auf den Seiten 103 bis 113 beschrieben.

Die Reaktionskomponenten werden z.B. nach dem an sich bekannten Einstufenverfahren, dem Prepolymerverfahren oder dem Semiprepolymerverfahren, in der Regel bei Kennzahlen von 50 bis 300, vorzugsweise 95 bis 250, zur Umsetzung gebracht, wobei man sich oft maschineller Einrichtungen bedient, z.B. solcher, die in der US-PS 2 764 565 beschrieben werden. Einzelheiten über Verarbeitungseinrichtungen, die auch erfindungsgemäß infrage kommen, werden im Kunststoff-Handbuch, Band VII, herausgegeben von Vieweg und Höchtlen, Carl-Hanser-Verlag, München 1966, z.B. auf den Seiten 121 bis 205 beschrieben.

Die Schaumstoffherstellung kann erfindungsgemäß auch in geschlossenen Formen durchgeführt werden. Dabei wird das Reaktionsgemisch in eine Form eingetragen. Als Formmaterial kommt Metall, z.B. Aluminium, oder Kunststoff, z.B. Epoxidharz, infrage. In der Form schäumt das schaumfähige Reaktionsgemisch auf und bildet den Formkörper. Die Formverschäumung kann dabei so durchgeführt werden, daß das Formteil an seiner Oberfläche Zellstruktur aufweist, sie kann aber auch so durchgeführt werden, das das Form teil eine kompakte Haut und einen zelligen Kern aufweist. Erfindungsgemäß kann man in diesem Zusammenhang so vorgehen, daß man in die Form so viel schäumfähiges Reaktionsgemi-

4

sch einträgt, daß der gebildete Schaumstoff die Form gerade ausfüllt. Man kann aber auch so arbeiten, daß man mehr schäumfähiges Reaktionsgemisch in die Form einträgt, als zur Ausfüllung des Forminneren mit Schaumstoff notwendig ist. Im letztgenannten Fall wird somit unter "overcharging" gearbeitet; eine derartige Verfahrensweise mit z.B. aus den US-PS 3 178 490 und 3 182 104 bekannt.

Bei der Formverschäumung werden vielfach an sich bekannte "äußere Trennmittel", wie Siliconöle, mitverwendet. Man kann aber auch sogenannte "innere Trennmittel", gegebenenfalls im Gemisch mit äußeren Trennmitteln, verwenden, wie sie z.B. aus den DE-OS 2 121 670 und 2 307 587 bekannt geworden sind.

Selbstverständlich können aber auch Schaumstoffe durch Blockverschäumung oder nach dem an sich bekannten Doppeltransportbandverfahren hergestellt werden.

Die nach der Erfindung erhältlichen Schaumstoffe finden z.B. als Dämmplatten für die Dachisolierung Anwendung.

Die Erfindung wird mit den Beispielen und Vergleichsbeispielen A bis G näher erläutert.

Die erfindungsgemäßen Beispiele B und F zeigen gegenüber den Vergleichsbeispielen A bzw. E erniedrigte Rauchgas dichten. Vergleichsbeispiel C zeigt, daß der Einsatz von Halogen und Phosphor gegenüber Vergleichsbeispiel A zu einem Anstieg der rauchgasdichte führt. Auch hier wird durch die Verwendung von $Mg(OH)_2$ die Rauchgasdichte gesenkt, wie das erfindungsgemäße Beispiel D zeigt.

Wie aus den Beispielen G und H gegenüber Beispiel B hervorgeht, hat die mittlere Korngröße des $Mg(OH)_2$ erheblichen Einfluß auf die Rauchgasunterdrückung. Besonders bevorzugt wird daher $Mg(OH)_2$ in Korngrößen von 5 bis 40 $\mu$m eingesetzt.

Die Prüfung der Rauchgasdichte erfolgt nach dem in ASTM D 2843 - 70 beschriebenen Prüfverfahren. Die Zahlen geben die nach diesem Verfahren ermittelten "Smoke-Density Ratings" wieder.

Beispiel

| | A | B | C | D | E | F | G | H |
|---|---|---|---|---|---|---|---|---|
| Zucker/Propylenglykol-Propylenoxid-Polyether, OH-Zahl 470 | 28,3 | 28,3 | 28,3 | 28,3 | 28,3 | 28,3 | 28,3 | 28,3 |
| Zucker/Ethylenglykol-Propylenoxid-Polyether, OH-Zahl 450 | 12,1 | 12,1 | 12,1 | 12,1 | 12,1 | 12,1 | 12,1 | 12,1 |
| Polyester aus Phthalsäure, Adipinsäure, Diethylenglykol, OH-Zahl 200 | 40,4 | 40,4 | 40,4 | 40,4 | 40,4 | 40,4 | 40,4 | 40,4 |
| Emulgator (Umsetzungsprodukt aus Nonylphenol und Ethylenoxid) | 4,3 | 4,3 | 4,3 | 4,3 | 4,3 | 4,3 | 4,3 | 4,3 |
| Stabilisator Polyurax® SR 242 (Fa. BP Chemicals) | 1 | 1 | 1 | 1 | 1 | 1 | 1 | 1 |
| Kaliumacetat, 25 %ig in Diethylenglykol | 3,8 | 3,8 | 3,8 | 3,8 | 4,5 | 4,5 | 3,8 | 3,8 |
| Dimethyl-cylohexylamin | 0,4 | 0,34 | 0,4 | 0,4 | 0,5 | 0,5 | 0,34 | 0,34 |
| Wasser | 0,5 | 0,5 | 0,5 | 0,5 | 0,5 | 0,5 | 0,5 | 0,5 |

0 265 650

Beispiel (Fortsetzung)

|  | A | B | C | D | E | F | G | H |
|---|---|---|---|---|---|---|---|---|
| Tris-(2-chlorethyl)phosphat | - | - | 15 | 15 | - | - | - | - |
| $Mg(OH)_2$, Korn 20 µm, Typ FR 003 (Fa. Lehmann und Voss) | - | 15 | - | 15 | - | 15 | - | - |
| $Mg(OH)_2$, Korn 3 µm, Typ KJ (Fa. Lehmann und Voss) | - | - | - | - | - | - | - | 15 |
| $Mg(OH)_2$, Korn 0,6 µm, Typ AJ (Fa. Lehmann und Voss) | - | - | - | - | - | - | 15 | - |
| Trichlormonofluormethan | 30 | 30 | 30 | 30 | 34 | 34 | 30 | 30 |
| Rohes - MDI (Desmodur® 44 V 20, Bayer AG) | 126 | 126 | 126 | 126 | 185 | 185 | 126 | 126 |
| Smoke-Density-Rating (gemäß ASTM D 2843 - 70) | 13 | 8 | 15 | 11 | 12 | 9 | 12 | 12 |
| Kennzahl | 156 | 156 | 156 | 156 | 226 | 226 | 156 | 156 |
| Rohdichte $(kg/m^3)$ | 33 | 35 | 35 | 38 | 37 | 38 | 36 | 35 |

0 265 650

**Ansprüche**

1. Verwendung von Mg(OH)₂ bei der Herstellung von Schaumstoffen auf Basis von aromatischen Isocyanaten, dadurch gekennzeichnet, daß Mg(OH)₂ in einer Menge von 4 bis 100 Gew.-%, bezogen auf den Schaumstoff auf Basis von aromatischen Isocyanaten, eingesetzt wird.

2. Verwendung gemäß Anspruch 1 , dadurch gekennzeichnet, daß Mg(OH)₂ in einer Menge von 4 bis 50 Gew.-%, bezogen auf den Schaumstoff auf Basis von aromatischen Isocyanaten, eingesetzt wird.

3. Verwendung gemäß Ansprüchen 1 und 2, dadurch gekennzeichnet, daß die Korngröße des eingesetzten Mg(OH)₂ 0,5 -50 µm, vorzugsweise 5 - 40 µm, beträgt.

4. Verwendung gemäß Ansprüchen 1 bis 3 bei der Herstellung von Polyurethanschaumstoffen.

5. Verwendung gemäß Ansprüchen 1 bis 3 bei der Herstellung von Polyisocyanuratschaumstoffen.

6. Verwendung gemäß Ansprüchen 1 bis 5 bei der Herstellung von solchen Schaumstoffen auf Basis von aromatischen Isocyanaten, die 2 - 20 Gew.-%, bezogen auf den Schaumstoff, an Halogen-und/oder Phosphorverbindungen enthalten.